# EUROPÄISCHE PATENTSCHRIFT

(11) **EP 3 039 584 B1**
(45) Veröffentlichungstag und Bekanntmachung des Hinweises auf die Patenterteilung: **17.08.2022**
(21) Anmeldenummer: 14730117.0
(22) Anmeldetag: 05.06.2014
(51) Int. Cl.: G06F 30/00, G06F 30/20, G06F 113/20, G06F 113/22, G06F 113/24, G06F 113/26

(54) **VERFAHREN ZUR ERZEUGUNG EINES DATENSATZES ZUR BESCHREIBUNG EINER AUF EINER DREIDIMENSIONAL GEFORMTEN BAUTEILOBERFLÄCHE BEFINDLICHEN FOLIE**
METHOD FOR GENERATING A DATA RECORD FOR DESCRIPTION OF A FILM PRESENT ON A THREE-DIMENSIONALLY FORMED COMPONENT SURFACE
PROCÉDÉ DE CRÉATION D'UN JEU DE DONNÉES SERVANT À DÉCRIRE UNE FEUILLE DISPOSÉE SUR LA SURFACE D'UN COMPOSANT FORMÉ EN TROIS DIMENSIONS

(30) Priorität: 26.08.2013 DE 102013109193
(43) Veröffentlichungstag der Anmeldung: 06.07.2016
(73) Patentinhaber: Benecke-Kaliko AG, 30419 Hannover (DE)
(72) Erfinder: JUNGBLUTH, Benjamin, 30177 Hannover (DE); STAHLHUT, Oliver, 30900 Wedemark ot Mellendorf (DE); MAEKER, Michael, 30449 Hannover (DE)
(74) Vertreter: Continental Corporation
(86) Internationale Anmeldenummer: PCT/EP2014/061646
(87) Internationale Veröffentlichungsnummer: WO 2015/028162

(56) Entgegenhaltungen:
- EP-A1- 2 182 487
- JP-A- H07 241 909
- US-A1- 2007 083 383
- US-A1- 2007 132 776
- Gugyong Kim ET AL: "Prediction of the film thickness distribution and pattern change during film insert thermoforming", POLYMER ENGINEERING AND SCIENCE., vol. 49, no. 11, 24 August 2009 (2009-08-24), pages 2195-2203, XP055509410, US ISSN: 0032-3888, DOI: 10.1002/pen.21467

## Beschreibung

Die Erfindung betrifft ein Verfahren zur Erzeugung eines Datensatzes zur Beschreibung einer auf einer dreidimensional geformten Bauteiloberfläche befindlichen Folie, wobei die Folie vor dem Aufbringen auf das Bauteil mit einer Mikrostruktur, d.h. einer sichtbaren Feinstruktur, insbesondere einer Narbung oder Prägung versehen ist und beim Herstellen des Bauteils in Bezug auf ihre ursprüngliche und vor dem Aufbringen auf die Bauteiloberfläche vorhandene Abmessung und Dickenverteilung dreidimensional gedehnt und verstreckt wird durch das ggf. unter Zufuhr von Druck und Wärme erfolgte Anlegen an die Bauteiloberfläche,
wobei zunächst durch eine rechnergestützte Simulation und Modellierung des rheologischen Verhaltens des Folienmaterials beim Aufbringen auf die Bauteiloberfläche die durch die Dehnung und Streckung parallel zur Folienebene und in Bezug auf die Schichtdicke, d.h. in allen drei Achsen erfolgende geometrische Veränderung der Folie ermittelt wird und in Form eines ersten Datensatzes bereitgestellt wird.

Mit z.B. thermoplastischen Folien versehene dreidimensional geformte Bauteiloberflächen findet man in der Regel als Oberflächen im Automobilinnenraum. Die Folien sind oft mit einer ebenfalls mikroskopisch dreidimensional strukturierten Oberfläche (Narbung, Prägung) versehen, wobei die bereits in einem vorlaufenden Formgebungsschritt mit einer Oberflächenstruktur versehene Folie einem weiteren nachfolgenden formgebenden Verarbeitungsschritt unterworfen wird, insbesondere einem formgebenden Tiefziehen, bei dem die Folie ihre Bauteilform erhält.

Der vorlaufende Formgebungsschritt, bei dem die Folie mit einer Oberflächenstruktur versehen wird, besteht in aller Regel aus einem Prägeverfahren. Als nachfolgenden formgebenden Verarbeitungsschritt kennt man dabei neben dem Tiefziehen natürlich eine Reihe weiterer Umformverfahren, wie etwa Thermoformen, Presskaschieren, Hinterspritzen, Negativ Thermoformen (IMG in-mould graining), bei denen die Folie gegen Formen gepresst wird und ihre Bauteilform erhält.

Thermoplastische Folien mit einer dreidimensional strukturierten, geprägten Oberfläche, also etwa genarbte, gemusterte, oder fein strukturiert Formhäute aus Kunststoffen sind als Oberflächen für Gegenstände weithin bekannt und werden z. B. verwendet für die Innenverkleidung in Fahrzeugen, hier oft als relativ weiche unterschäumte Folien, so genannte Schaumfolien, mit angenehmer Haptik etwa für die Verkleidung von Armaturenbrettern oder die Innenschalen von Türen etc. In entsprechender Anpassung von Festigkeit und Design werden solche Folien natürlich auch für andere hochwertig beschichtete Waren genutzt.

Im Stand der Technik sind zur Herstellung solcher Formhäute verschiedene Verfahren bekannt, zum Beispiel Walzverfahren zur Herstellung von "endlosen" Folienbahnen oder auch Verfahren zur Herstellung von werkzeugfallenden einzelnen Formhäuten. Hier sind jedoch im Weiteren die Walzverfahren angesprochen, bei denen eine thermoplastische Folie mit Hilfe einer Prägewalze mit einer Oberflächenstruktur versehen wird.

Dem Fachmann ist in Bezug auf nachfolgende Verformungsverfahren das Problem bekannt, dass beim Aufbringen einer Folie auf ein dreidimensionales Bauteil, also etwa bei einem Ziehvorgang, bei dem eine mit einer einheitlich geprägten Oberfläche versehene Folie in ein Formwerkzeug gezogen (Tiefziehen) oder über einen festen Träger oder Grundkörper gespannt wird, es natürlich zu erheblichen Verformungen der Folie kommen kann. Es können dabei Verzerrungen durch sich ändernde Abstände zwischen einzelnen Oberflächenbereichen entstehen, die dem Betrachter als Unregelmäßigkeiten sofort auffallen. Da im Bereich des Automobilinterieurs ein starker Trend zur Verbesserung der Qualitätsanmutung zu beobachten ist, sind solche Unregelmäßigkeiten immer weniger akzeptabel.

Es ist also nötig, bereits im Vorfeld zu wissen, ob solche Unregelmäßigkeiten auftreten können, damit dann der Fertigungsprozess und die Auslegung der Prägung und der Umformung so angepasst werden können, dass Verzerrungen durch sich ändernde Abstände zwischen einzelnen Oberflächenbereichen möglichst nicht auftreten.

Hierzu werden üblicherweise gegenständliche Prototypen von folienbeschichteten Bauteilen hergestellt, die dann, oft zusammen mit dem Automobilhersteller, begutachtet werden und bei Fehlern immer noch einmal mit geänderten Parametern als Einzelteile und oft in Handarbeit aufwendig hergestellt und wiederum geprüft werden. Das ist natürlich eine sehr aufwendige und teure Art des Herantastens an die endgültig zu fertigende Ausführung.

Seit einiger Zeit und mit fortschreitender Automatisierung und Rechnerunterstützung auch in den Fertigungsbereichen und hier auch im Prototypenbau versucht man, computergestützte Verfahren zu nutzen, die im Rahmen einer Modellrechnung oder Simulation eine Visualisierung solcher Prototypen-Bauteile auf dem Bildschirm ermöglichen.

Der bisherige Stand der Technik im Bereich einer solcherart interaktiven Visualisierung von Oberflächen im Automobilinnenraum ermöglicht beispielsweise eine Beleuchtungssimulation von Materialien/Materialoberflächen. Es können Farben sowie Glanzeigenschaften festgelegt und dargestellt werden. Die virtuellen Materialeigenschaften werden entweder als Parameter theoretischer Modelle oder durch explizite Messungen festgelegt.

Zudem ist es möglich die als CAD-Modell vorliegenden Teile des Automobils mit Texturen, d.h. mit Modellen von natürlichen oder technischen Mikrostrukturen wie Leder, Holz, Sand, polierte Metallflächen, Gravuren, etc. zu belegen, welche einen Eindruck von Feinstrukturen auf der Oberfläche vermitteln. Als beispielhaftes Verfahren ist hierzu das "Bump Mapping" zu nennen, welches die Texturtiefeninformation nutzt, um eine dreidimensionale Wirkung der Mikrostrukturen auf den Betrachter zu erzielen und als eine Grundlage vieler heutiger Lösungen zu sehen ist.

Die Verwendung von Texturen stellt gegenüber der expliziten 3D-Modellierung der Feinstruktur einen Kompromiss dar, welcher aber die interaktive Betrachtung ganzer Automobilinnenräume ermöglicht, da durch diese Methode die zu verwaltende Datenmenge reduziert wird.

In Bezug auf folienbespannte Bauteile des Automobilinnenraums besteht der Stand der Technik in der Ermittlung der lokalen Verformung eines Folienzuschnitts während des Herstellungsprozesses und der anschließenden Verwendung dieser Daten zur korrekten Positionierung der Textur auf dem virtuellen Bauteil. Als Textur wird in diesem Fall die digitale Repräsentation ("Scan") einer bekannten Oberfläche verwendet, (vgl. OberflächenEigenschaften gezielt gestalten, Automotive Materials, Nr. 2, 2007, S. 29-33). Der Stand der Technik umfasst des Weiteren EP 2182487 A1, US 2007/083383 A1 und Kim et al., "Prediction of the film thickness distribution and pattern change during film insert thermoforming", Polymer Engineering and Science, Bd. 49, Nr. 11, 24. August 2009, Seiten 2195-2203.

Nachteiligerweise wird dabei jedoch der tatsächliche optische Eindruck, wie er bei einer gegenständlich-natürlichen Bauteiloberfläche mit einer umgeformten und mit einer Narbung versehenen Folie entsteht, nur unzureichend dargestellt. Insbesondere werden die Auswirkungen des Herstellungsprozesses am virtuellen Bauteil bisher nur durch eine lokale Skalierung repräsentiert. Diese ergibt sich aus der ungleichmäßigen Bauteiloberfläche sowie dem zeitlichen Ablauf des Bespannungsprozesses (z.B. Thermoformen).

Der Erfindung lag also die Aufgabe zugrunde, eine verbesserte Visualisierung von folienbespannten Bauteilen zu ermöglichen und so auf die doch in Zweifelsfällen immer wieder nötige Prototypenerstellung ganz zu verzichten und eine solche Qualität der Visualisierung von mit mikrostrukturierten Folien versehenen Bauteilen zu erreichen, die dem Erscheinungsbild einer gegenständlich-natürlichen Bauteiloberfläche tatsächlich so nahe kommt, dass eine Herstellentscheidung ohne Prototyp getroffen werden kann.

Gelöst wird diese Aufgabe durch die Merkmale des Hauptanspruchs. Weitere vorteilhafte Ausbildungen sind in den Unteransprüchen offenbart.

Dabei wird zunächst ein die ursprüngliche Topologie der Mikrostruktur bzw. Narbung oder Prägung der Folie im unverformten Zustand und vor dem Aufbringen auf das Bauteil repräsentierender und aus Höhen- und Tiefeninformationen bestehender zweiter Datensatz aus einer Vermessung der Topologie bereitgestellt. Diese Makrostruktur, Narb- oder Prägestruktur liegt aus optischen Messungen in Form von Tiefenkarten in der Regel heutzutage vor.

Das Verfahren besteht nun darin, dass über das Modell des rheologischen Verhaltens des Folienmaterials und die Veränderung der Folie beim Aufbringen auf die Bauteiloberfläche mit globaler und lokaler durch die Mikrostruktur beeinflusster, geometrischer Verformung in allen drei Achsen Veränderungsdaten festgestellt werden, um die Prozessparameter beim Aufbringen der Folie und die Folienmikrostruktur festzulegen.

So ermittelt man z.B. bei einem Tiefziehbauteil mit dieser Modellierung Verschiebungsvektoren für jeden Massepunkt und damit jeden geometrischen Ort/Punkt der vor dem Aufbringen planen/ebenen und mit einer vorgegebenen Schichtdicke vorliegenden Folie, welche eine Korrelation der Massepunkte im Zustand "plan/eben" mit demselben Massepunkt im Zustand "verformt" beschreiben. Damit erhält man also auch an allen Bauteilpunkten eine Zuordnung der Schichtdicken und zugehörigen Ortspunkte der verformten Folie zu denselben Orten und Schichtdicken in der ursprünglich vorliegenden ebenen Folie.

Es liegen also die als Ergebnis der Simulation errechneten und im ersten Datensatz ausgegebenen Daten für die Verteilung und Position der endgültigen und nach Aufbringen auf die Bauteiloberfläche vorhandenen Schichtdicke der Folie lagerichtig und relativ zur Schichtdicke der unverformten Folie vor.

Erfindungsgemäß werden nun diese durch eine rechnergestützte Simulation und Modellierung des rheologischen Verhaltens ermittelten Daten des ersten Datensatzes so zur Veränderung des zweiten Datensatzes verwendet, dass die Höhen- und Tiefeninformationen des zweiten Datensatzes unter Berücksichtigung der Dehnung und Streckung parallel zur Folienebene ortsrichtig/lokal mit Hilfe der aus den Simulationsergebnissen ermittelten Daten für die Schichtdicke auf eine kongruent zur geänderten Schichtdicke geänderte Höhen- und Tiefeninformationen umgerechnet bzw. angepasst und in einem dritten Datensatz abgelegt werden.

Die Änderung der Höhen- und Tiefeninformationen besteht natürlich in aller Regel in einer Verringerung, nämlich bedingt durch die bei Dehnung erfolgende Verdünnung der Folie. Dass heißt zum Beispiel, dass die Folienbereiche, welche laut Simulation nach der Aufbringung auf das Bauteil eine geringere Foliendicke aufweisen, in ihren aus der Vermessung der Strukturtiefe/Mikrostrukturtiefe der Folie im Zustand "plan/eben" vor der Aufbringung enthaltenen Daten entsprechend verringert werden. Die so berechneten "neuen" Höhen- und Tiefeninformationen des dritten Datensatzes werden danach als neue Mikrostruktur der nach dem Aufbringen auf das Bauteil veränderten Folie dem ersten Datensatz und ggf. einem Datensatz zur Beschreibung der Bauteilgeometrie zur visuellen Darstellung auf einem Bildschirm aufaddiert/überlagert. Es wird also erfindungsgemäß für die Visualisierung eine Modifikation der mikrostrukturierten Oberfläche vorgenommen und diese abhängig von über Simulationsverfahren berechneten Materialwanderungen bei Verformungsprozessenim Sinne einer Rückkopplung überlagert.

Die Veränderung der Dickenverteilung der Folie durch das Aufbringen ist somit ein Maß für die ebenfalls vorhandene Mikrostrukturveränderung der Folie.

Damit können überraschenderweise in relativ einfachen Schritten die vielfältigen Veränderungen in einem nichtlinearen Prozessablauf der Verformung beim Aufbringen einer Folie auf ein dreidimensionales Bauteil berücksichtigt und sicher dargestellt werden, wohingegen eine streng numerische Berechnung aller Effekte über z.B. einen FEM-basierten Algorithmus einen viel zu hohen Aufwand an Rechenzeit und Rechenkapazität erfordern würde.

Es handelt sich also um ein Verfahren, bei dem durch rechnergestützte Simulation und Modellierung des rheologischen Verhaltens einer Folie ermittelte Daten der Schichtdickenverteilung nach Umformung relativ zum Zustand vor Umformung zur Veränderung der Visualisierungsdaten der Mikrostruktur der Folie bei Darstellung eines Prototypen verwendet werden

Diese Art der Veränderungen von Parametern zur Visualisierung abhängig von der durch Modellierung des rheologischen Verhaltens ermittelten Schichtdickenveränderung lassen sich erfindungsgemäß auch auf die Glanz- oder Farbeigenschaften sowie auf nicht lineare Verformungen der Mikrostrukturgeometrie beziehen, insbesondere bei einem üblicherweise mehrlagigen Aufbau der Folien (Schaum, Deckstrich und Lack). Durch die Berücksichtigung dieser Effekte kann gewährleistet werden, dass die dargestellten Bauteile entsprechend der alle Konstruktionsparameter der Folie betreffenden Auswirkungen des realen Herstellungsprozesses abgebildet werden können.

So besteht eine vorteilhafte Weiterbildung darin, dass die Höhen- und Tiefeninformationen des zweiten Datensatzes unter Berücksichtigung der Dehnung und Streckung parallel zur Folienebene ortsrichtig/lokal mit Hilfe der aus den Simulationsergebnissen ermittelten Daten für die Schichtdicke auf eine kongruent zur geänderten Schichtdicke geänderte (verringerte) Höhen- und Tiefeninformationen auf eine solche Weise umgerechnet bzw. angepasst werden, dass die Daten für die Streckung/Dehnung der Folie im Bereich der Täler der Mikrostruktur im Vergleich zu den entsprechenden Daten für die Hochpunkten der Mikrostruktur um einen wissensbasiert ermittelten Faktor verändert und die umgerechneten Daten sodann in dem dritten Datensatz abgelegt werden.

Der Begriff "wissensbasiert" meint hier das Verwenden von in Daten umgewandelten Erfahrungswerten über das Materialverhalten bei Umformungen, hier über die bei Umformung von genarbten Strukturen erkennbare Kerbwirkung, bei der die "Täler" einer Narbung oder Makrostruktur viel heftiger gedehnt und beansprucht werden als die "Hügel" oder hohen Teile der Struktur. Dies führt dazu, dass bei tatsächlicher und berechneter Materialverdünnung der Folie die Veränderung der Mikrostruktur unter Ausbildung von lokalen Unterschieden erfolgt, die sich in Simulationsprozessen allein durch Rechnung nicht vorhersagen lassen, so dass sich das Erscheinungsbild der Oberfläche nach der Verformung erst durch empirisch ermittelte Daten verifizieren und damit so darstellen lässt, dass auch auf einem Bildschirm eine Bauteiloberfläche erscheint, die einer gegenständlich-natürlichen Bauteiloberfläche sehr nahe kommt.

Eine weitere vorteilhafte Ausbildung besteht darin, dass ein eine abhängig von der ursprünglichen Topologie der Mikrostruktur vor dem Aufbringen auf das Bauteil vorhandene Reflexionseigenschaft repräsentierender vierter Datensatz aus einer Vermessung der Oberflächenreflexion bei unterschiedlichem Lichteinfall und abhängig von den ortsrichtig zugeordneten Höhen- und Tiefeninformationen bereitgestellt wird, und dass die als Ergebnis der Simulation errechneten und im ersten Datensatz ausgegebenen Daten für die Verteilung und Positionierung der endgültigen und nach Aufbringen auf die Bauteiloberfläche vorhandene Schichtdicke der Folie unter Nutzung eines wissensbasierten Betrags/oder Faktors überlagert so zur Veränderung des vierten Datensatzes verwendet werden, dass die die Reflexionseigenschaften repräsentierenden Daten des vierten Datensatzes dem dritten Datensatz zur visuellen Darstellung auf einem Bildschirm aufaddiert/überlagert werden.

Wie bereits oben angesprochen, lassen sich weitere Parameter zur Visualisierung, welche z. B. nichtlineare Verformungsverläufe oder Materialwanderungseigenschaften einzelner Folienschichten repräsentieren, abhängig von der durch Modellierung des rheologischen Verhaltens ermittelten Schichtdickenveränderung verändern. So ist beispielsweise die im Vergleich zur Deckschicht sich andersartig verformende Folienunterschicht aus Schaumstoff wissensbasiert in ihrer Visualisierung veränderbar.

Dasselbe gilt für Farbschichten oder Lacke, die sich erfindungsgemäß in ihren Visualisierungsdaten verändern lassen. So ist z.B. empirisch ermittelt worden, dass in Bereichen hoher Dehnung und damit Schichtdickenverringerung Lacke glänzend werden und Farbeindrücke sich verändern. Natürlich ließen sich diese Effekte physikalisch beschreiben (Rissstrukturen, Veränderungen der Molekülketten und ihrer Reflexions- und Absorptionseigenschaften etc.), jedoch wären für deren Umrechnung über die Materialverformung Datenmengen und Rechnerleistungen erforderlich, die kaum zu Verfügung stehen. Eine streng numerische Berechnung über z.B. einen FEM-basierten Algorithmus würde zudem einen viel zu hohen Zeitaufwand erfordern und eine Visualisierung unwirtschaftlich werden lassen.

Besonders geeignet ist, wie oben bereits ausgeführt, die Verwendung der Daten eines erfindungsgemäß erzeugten Datensatzes zur visuellen Darstellung eines Prototypen einer auf einer dreidimensional geformten Bauteiloberfläche befindlichen Folie auf einem Bildschirm oder auf einem Display.

Ebenso vorteilhaft lässt sich der erfindungsgemäß erzeugte Datensatz für die Steuerung oder den Betrieb eines Druckers, insbesondere eines 3-D-Druckers verwenden, so dass eine visuelle Darstellung eines Prototypen auf Papier oder auch die Erstellung eines Modell auf einem 3-D-Drucker möglich ist, z.B. auch in einem veränderten Maßstab zum Musterversand an Kunden.

## Patentansprüche

1. Verfahren zur Erzeugung eines Datensatzes zur visuellen Darstellung eines Prototypen einer auf einer dreidimensional geformten Bauteiloberfläche befindlichen Folie auf einem Bildschirm oder auf einem Display,
(a) wobei die Folie vor dem Aufbringen auf das Bauteil mit einer Mikrostruktur, insbesondere einer Narbung oder Prägung versehen ist und beim Herstellen des Bauteils in Bezug auf ihre ursprünglichen und vor dem Aufbringen auf die Bauteiloberfläche vorhandenen Abmessung und Dickenverteilungen dreidimensional gedehnt und verstreckt wird durch das ggf. unter Zufuhr von Druck und Wärme erfolgte Anlegen an die Bauteiloberfläche,
(b) wobei zunächst durch eine rechnergestützte Simulation und Modellierung des rheologischen Verhaltens des Folienmaterials beim Aufbringen auf die Bauteiloberfläche die durch die Dehnung und Streckung parallel zur Folienebene und in Bezug auf die Schichtdicke erfolgende geometrische Veränderung der Folie dadurch lagerichtig ermittelt wird, dass Verschiebungsvektoren für jeden Massepunkt und damit jeden geometrischen Ort der vor dem Aufbringen ebenen und mit einer vorgegebenen Schichtdicke vorliegenden Folie ermittelt werden, wobei die Verschiebungsvektoren die Veränderung der Massepunkte im Zustand "eben" mit demselben Massepunkt im Zustand "verformt" beschreiben, und die geometrische Veränderung als Daten für die Verteilung und die Position der endgültigen und nach Aufbringen auf die Bauteiloberfläche vorhandenen Schichtdicke der Folie relativ zu der Schichtdicke der unverformten Folie in Form eines ersten Datensatzes bereitgestellt wird,
**dadurch gekennzeichnet,**
(c) **dass** ein die ursprüngliche Topologie der Mikrostruktur bzw. Narbung oder Prägung der Folie im unverformten Zustand und vor dem Aufbringen auf das Bauteil repräsentierender und aus Höhen- und Tiefeninformationen bestehender zweiter Datensatz aus einer optischen Vermessung der Topologie bereitgestellt wird,
(d) **dass** die als Ergebnis der Simulation errechneten und im ersten Datensatz ausgegebenen Daten für die Verteilung und die Position der endgültigen und nach Aufbringen auf die Bauteiloberfläche vorhandene Schichtdicke der Folie relativ zu der Schichtdicke der unverformten Folie so zur Veränderung des zweiten Datensatzes verwendet werden, dass die Höhen- und Tiefeninformationen des zweiten Datensatzes unter Berücksichtigung der Dehnung und Streckung parallel zur Folienebene ortsrichtig mit Hilfe der aus den Simulationsergebnissen ermittelten Daten für die Schichtdicke auf eine kongruent zur geänderten Schichtdicke geänderte Höhen- und Tiefeninformationen umgerechnet bzw. angepasst und in einem dritten Datensatz abgelegt werden,
(e) wonach die so berechneten Höhen- und Tiefeninformationen des dritten Datensatzes als neue Mikrostruktur der Folie nach dem Aufbringen auf das Bauteil dem ersten Datensatz aufaddiert/überlagert werden.

2. Verfahren nach Anspruch 1, bei dem die Höhen- und Tiefeninformationen des zweiten Datensatzes unter Berücksichtigung der Dehnung und Streckung parallel zur Folienebene ortsrichtig mit Hilfe der aus den Simulationsergebnissen ermittelten Daten für die Schichtdicke auf eine kongruent zur geänderten Schichtdicke geänderte Höhen- und Tiefeninformationen auf eine solche Weise umgerechnet bzw. angepasst werden, dass die Daten für die Streckung/Dehnung der Folie im Bereich der Täler der Mikrostruktur im Vergleich zu den entsprechenden Daten für die Hochpunkten der Mikrostruktur um einen wissensbasiert ermittelten Faktor verändert und die umgerechneten Daten sodann in dem dritten Datensatz abgelegt werden.

3. Verfahren nach Anspruch 1 oder 2, bei dem
- ein eine abhängig von der ursprünglichen Topologie der Makrostruktur vor dem Aufbringen auf das Bauteil vorhandene Reflexionseigenschaft repräsentierender vierter Datensatz aus einer Vermessung der Oberflächenflexion bei unterschiedlichem Lichteinfall und abhängig von den ortsrichtig zugeordneten Höhen- und Tiefeninformationen bereitgestellt wird,
- dass die als Ergebnis der Simulation errechneten und im ersten Datensatz ausgegebenen Daten für die Verteilung und Positionierung der endgültigen und nach Aufbringen auf die Bauteiloberfläche vorhandene Schichtdicke der Folie unter Nutzung eines wissensbasierten Betrags/oder Faktors überlagert so zur Veränderung des vierten Datensatzes verwendet werden, dass die die Reflexionseigenschaften repräsentierenden Reflexionsdaten des vierten Datensatzes dem dritten Datensatz zur visuellen Darstellung auf einem Bildschirm aufaddiert/überlagert werden.

4. Verfahren nach einem der vorherigen Ansprüche,
**gekennzeichnet durch** die Verwendung der Daten der nach dem Verfahren der gemäß Anspruch 1 bis 3 erzeugten Datensätze zum Betrieb eines Druckers und zum Bedrucken eines flächigen Trägers, insbesondere eines Papiers, mit einer visuellen Darstellung eines Prototypen einer auf einer dreidimensional geformten Bauteiloberfläche befindlichen Folie.

5. Verfahren nach einem der Ansprüche 1 bis 3,
**gekennzeichnet durch** die Verwendung der Daten der nach dem Verfahren der gemäß Anspruch 1 bis 3 erzeugten Datensätze zum Betrieb eines 3-D-Druckers zur Herstellung eines Prototypen, ggf. eines maßstäblich veränderten Prototypen einer auf einer dreidimensional geformten Bauteiloberfläche befindlichen Folie.

## Claims

1. Method for generating a data record for the visual representation of a prototype of a film present on a three-dimensionally formed component surface on a monitor or on a display,
(a) wherein, before the application to the component, the film is provided with a microstructure, in particular a grain or embossing, and, during the production of the component, is three-dimensionally stretched and extended in relation to its original dimension and thickness distributions present before the application to the component surface as a result of being laid on the component surface, possibly carried out with the supply of pressure and heat,wherein, firstly, by means of computer-aided simulation and modelling of the rheological behaviour of the film material as it is applied to the component surface, the geometric change in the film that takes place as a result of the stretching and extension parallel to the film plane and in relation to the layer thickness is determined in the correct position in that displacement vectors for each mass point and therefore each geometric location of the film that is flat and present with a predefined layer thickness before the application are determined, wherein the displacement vectors describe the change in the mass point in the "flat" state with the same mass point in the "deformed" state, and the geometric change is provided as data for the distribution and the position of the final layer thickness of the film that is present following application to the component surface relative to the layer thickness of the nondeformed film, in the form of a first data record, **characterized in that** a second data record representing the original topology of the microstructure or grain or embossing of the film in the nondeformed state and before the application to the component and comprising height and depth information is provided from an optical measurement of the topology,
(b) **in that** the data calculated as a result of the simulation and output in the first data record for the distribution and the position of the final layer thickness of the film that is present following the application to the component surface relative to the layer thickness of the nondeformed film is used to change the second data record such that the height and depth information of the second data record is recalculated or adapted, while taking into account the stretching and extension parallel to the film plane in the correct location with the aid of the data determined from the simulation results for the layer thickness, to changed height and depth information that is congruent with the changed layer thickness, and is stored in a third data record,after which the height and depth information from the third data record calculated in this way is added to/superimposed on the first data record as a new microstructure of the film following the application to the component.

2. Method according to Claim 1, in which the height and depth information of the second data record is recalculated or adapted, while taking into account the stretching and extension parallel to the film plane in the correct location with the aid of the data determined from the simulation results for the layer thickness, to changed height and depth information that is congruent with the changed layer thickness, in such a way that the data for the extension/stretching of the film in the region of the valleys of the microstructure, as compared with the corresponding data for the high points of the microstructure, is changed by a factor determined on a knowledge basis, and the recalculated data is then stored in the third data record.

3. Method according to Claim 1 or 2, in which
- - a fourth data record representing a reflection characteristic that is present depending on the original topology of the macrostructure before the application to the component is provided from a measurement of the surface reflection with a different incidence of light and depending on the height and depth information assigned at the correct location,and in which the data for the distribution and positioning of the final layer thickness of the film that is present following the application to the component surface, calculated as a result of the simulation and output in the first data record, superimposed by using a knowledge-based magnitude and/or factor, is used to change the fourth data record in such a way that the reflection data of the fourth data record representing the reflection characteristics is added to/superimposed on the third data record for the visual representation on a monitor.

4. Method according to one of the preceding claims,
**characterized by** the use of the data from the data records generated according to the method according to Claims 1 to 3 to operate a printer and to print a flat support, in particular a paper, with a visual representation of a prototype of a film present on a three-dimensionally formed component surface.

5. Method according to one of Claims 1 to 3,
**characterized by** the use of the data from the data records generated according to the method according to Claims 1 to 3 to operate a 3D printer to produce a prototype, possibly a scaled prototype, of a film present on a three-dimensionally formed component surface.

## Revendications

1. Procédé de génération d'un ensemble de données destiné à représenter visuellement un prototype d'un film, situé sur une surface de composant de forme tridimensionnelle, sur un écran ou sur un affichage,
(a) le film étant pourvu d'une microstructure, en particulier d'un grain ou d'un gaufrage, avant d'être appliqué sur le composant et étant expansé et étiré en trois dimensions, pendant la fabrication du composant, quant à ses dimensions et répartitions d'épaisseur d'origine et avant d'être appliqué sur la surface de composant par dépôt sur la surface du composant éventuellement avec apport de pression et de chaleur,
(b) tout d'abord, la modification géométrique du film due à l'expansion et de l'étirement parallèlement au plan du film et par rapport à l'épaisseur de couche étant déterminée en termes de position correcte apar simulation et modélisation informatisées du comportement rhéologique de la matière du film, lorsqu'il est appliqué sur la surface du composant, en ce que des vecteurs de déplacement sont déterminé pour chaque point de masse et donc chaque lieu géométrique du film qui est plan et d'épaisseur de couche spécifiée avant l'application, les vecteurs de déplacement décrivant la modification des points de masse à l'état « plan » avec le même point de masse à l'état « déformé », et la modification géométrique étant fournie comme données de répartition et de position de l'épaisseur de couche du film, finale et après application sur la surface de composant, par rapport à l'épaisseur de couche du film non déformé sous la forme d'un premier ensemble de données.
**caractérisé en ce que**
(c) un deuxième ensemble de données, comprenant des informations de hauteur et de profondeur et représentant la topologie d'origine de la microstructure ou le grain ou le gaufrage du film à l'état non déformé et avant son application sur le composant, est fourni à partir d'une mesure optique de la topologie,
(d) les données calculées comme résultat de la simulation et délivrées dans le premier ensemble de données pour la répartition et la position de l'épaisseur de couche finale du film et après application sur la surface de composant par rapport à l'épaisseur de couche du film non déformé sont utilisés pour modifier le deuxième ensemble de données de sorte que les informations de hauteur et de profondeur du deuxième ensemble de données soient converties ou ajustées, avec prise en compte de l'expansion et de l'étirement parallèlement au plan du film, pour obtenir des informations de hauteur et de profondeur modifiées en conformité avec l'épaisseur de couche modifiée à l'aide des données relatives à l'épaisseur de couche et déterminées à partir des résultats de simulation et soient stockées dans un troisième ensemble de données,
(e) puis les informations de hauteur et de profondeur calculées du troisième ensemble de données sont ajoutées/superposées au premier ensemble de données en tant que nouvelle microstructure du film après l'application sur le composant.

2. Procédé selon la revendication 1, dans lequel les informations de hauteur et de profondeur du deuxième ensemble de données sont converties ou adaptées, avec prise en compte de l'expansion et de l'étirement parallèlement au plan du film, de manière correcte en termes de position à l'aide des données relatives à l'épaisseur de couche et déterminées à partir des résultats de la simulation, en une information de hauteur et de profondeur modifiées en conformité avec l'épaisseur de couche modifiée de sorte que les données d'étirement/d'expansion du film dans la zone des vallées de la microstructure sont modifiées d'un facteur déterminé connu par rapport aux données correspondantes relatives aux sommets de la microstructure et les données converties sont alors stockées dans le troisième ensemble de données.

3. Procédé selon la revendication 1 ou 2, dans lequel
- un quatrième ensemble de données, représentant une propriété de réflexion présente en fonction de la topologie d'origine de la macrostructure avant l'application sur le composant, est fourni à partir d'une mesure de la réflexion de surface pour différentes incidences de lumière et en fonction des informations de hauteur et de profondeur associées de manière correcte en termes de position,
- les données calculées comme résultat de la simulation, délivrées dans le premier ensemble de données et relatives à la répartition et au positionnement de l'épaisseur de couche du film, finale et après application sur la surface de composant, sont superposées à l'aide d'une quantité/ou d'un facteur connus afin de modifier le quatrième ensemble de données de sorte que les données de réflexion, représentant les propriétés de réflexion, du quatrième ensemble de données soient ajoutées/superposées au troisième ensemble de données en vue d'un affichage visuel sur un écran.

4. Procédé selon l'une des revendications précédentes,
**caractérisé par** l'utilisation des données des ensembles de données, générés selon le procédé des revendications 1 à 3, pour faire fonctionner une imprimante et pour imprimer sur un support sensiblement bidimensionnel, en particulier du papier, une représentation visuelle d'un prototype d'un film situé sur un plan à une surface de composant de forme tridimensionnelle.

5. Procédé selon l'une des revendications 1 à 3,
**caractérisé par** l'utilisation des données des ensembles de données, générés selon le procédé des revendications 1 à 3, pour faire fonctionner une imprimante 3D afin de produire un prototype, éventuellement un prototype modifié à l'échelle, d'un film situé sur une surface de composant de forme tridimensionnelle.
